# EUROPÄISCHE PATENTANMELDUNG

(11) **EP 4 194 149 A1**
(43) Veröffentlichungstag der Anmeldung: **14.06.2023**
(21) Anmeldenummer: 22212294.7
(22) Anmeldetag: 08.12.2022
(51) Int. Cl.: B25B 23/14, G01L 1/25, G01N 23/00

(54) **VERFAHREN ZUM ÜBERWACHEN EINER KRAFTFAHRZEUG-SCHRAUBVERBINDUNG**

(30) Priorität: 09.12.2021 DE 102021132383
(71) Anmelder: Yazaki Systems Technologies GmbH, 93059 Regensburg (DE)
(72) Erfinder: DÜNSBIER, Stefan, 93051 Regensburg (DE); FRANK, Lennart, 93059 Regensburg (DE)
(74) Vertreter: Patentanwaltskanzlei WILHELM & BECK

(57) **Zusammenfassung**

Die Erfindung betrifft ein Verfahren zum Überwachen einer mechanischen Kraftfahrzeug-Schraubverbindung (1; 10, 20, 30), wobei die Schraubverbindung (1; 10, 20, 30) wenigstens zwei miteinander mittels einer Schraube (10) zu verspannende Elemente (30, 40) aufweist, wobei eine Elastizitätslängung (Lx) eines relevanten Schraubenabschnitts (L) der Schraube (10) in der Schraubverbindung (1; 10, 20, 30) als ein Kriterium für eine Verspannkraft der Schraubverbindung (1; 10, 20, 30) herangezogen wird, und die Elastizitätslängung der Schraube (10) durch ein Röntgenverfahren, insbesondere ein 3D-Röntgenverfahren, ermittelt wird.

## Beschreibung

Die Erfindung betrifft Verfahren zum Überwachen einer mechanischen Kraftfahrzeug-Schraubverbindung. Ferner betrifft die Erfindung eine mechanische Schraubverbindung für den Kraftfahrzeugbereich. Des Weiteren betrifft die Erfindung eine Entität, insbesondere eine elektrische und/oder mechanischen Entität, für den Kraftfahrzeugbereich.

Sicherheitskritische Schraubverbindungen für Kraftfahrzeuge, z. B. der Klasse A, sind in technischen Zeichnungen markiert und werden üblicherweise, aufgrund von Verträgen, z. B. zwischen einem Erstausrüster (OEM) und einem Zulieferer (Tier-1), bzw. in einer Zulieferkette, überwacht. Dies erfolgt meist herstellerseitig, wobei der Hersteller der Schraubverbindungen die Schraubverbindungen zu 100% überwacht. Die entsprechenden überwachten Prozessparameter der Schraubverbindungen werden dafür meist für 15 Jahre zurückverfolgbar aufbewahrt bzw. gespeichert (Traceability). Die sicherheitskritische Schraubverbindung kann eine Schraubverbindung zur elektrischen Verbindung von Komponenten beispielsweise innerhalb einer Hochvolt- (HV-) Verteilerbox eines elektrischen Kraftfahrzeugs sein. Auch kann die sicherheitskritische Schraubverbindung eine Verbindung innerhalb eines Kontaktierungssystems beispielsweise zum Anschluss eines elektrischen Energiespeichers (Traktionsbatterie) eines elektrischen Fahrzeugs sein.

Durch einen korrekten Schraubprozess für eine sicherheitskritische Schraubverbindung wird sichergestellt, dass sich eine Schraube in ihrem elastischen Bereich adäquat längt und derart eine korrekte Verspannkraft durch die Schraubverbindung erzeugt ist, dass die Schraubverbindung z. B. sicher gegen Vibrationsbelastungen ist. Eine adäquate Längung des elastischen Bereichs der Schraube kann eingestellt werden, indem in einem üblichen Schraubprozess die Parameter Anzugsmoment und Schraubdrehwinkel überwacht werden. - Eine signifikante plastische Verformung einer Schraube in einer Schraubverbindung wird hier und auch im Folgenden nicht betrachtet und ist natürlich auch unerwünscht.

Problematisch hieran ist, dass die beiden Parameter Anzugsmoment und Schraubdrehwinkel sich gegenseitig beeinflussen. Ferner ist das Anzugsmoment sehr variabel und von äußeren Faktoren abhängig, wie z. B. Oberflächen, Schmierung, Grate am Gewinde, Verschmutzung, Material etc. Eine enge Überwachung beider Parameter bedingt viel Ausschuss, sodass die beiden Parameter üblicherweise derart weit geöffnet werden müssen, damit wenigstens eine Fertigung mit einer maximalen Standardabweichung erfolgen kann (3-Sigma verteilter Ausschuss).

Ferner garantiert selbst die engste Überwachung der beiden Parameter Anzugsmoment und Schraubdrehwinkel keine 100%-Entdeckung fehlerhafter Verspannkräfte, da beide Parameter immer auch abhängig von äußeren Einflüssen (Schmierung, Grate am Gewinde, Verschmutzung, etc.) sind. Diese beiden sich gegenseitig beeinflussenden Parameter sind nur zeitaufwendig zu parametrieren und abzuändern. Ferner ergibt sich eine häufige Nacharbeit (3-maliges Nacharbeiten ist in der Regel erlaubt, aber kostenintensiv). - Insgesamt ergeben sich im Stand der Technik ein hoher Fertigungsausschuss und somit unnötige Kosten sowie eine zeit- und somit kostenintensive Nacharbeit.

Die US 10 325 362 B2 offenbart ein Verfahren zum Bestimmen einer axialen Spannung einer festzuziehenden Schraube. Dabei wird eine erste Senktiefe eines Schraubenkopfs zu einem ersten Zeitpunkt unter Verwendung eines ersten Abstandsbilds ermittelt, welches zu einem ersten Zeitpunkt durch einen Abstandssensor erfasst wird. Danach wird eine relative Lage eines Bildsensors des Abstandssensors relativ zum Schraubenkopf in Übereinstimmung mit einem Schraubdrehwinkel der Schraube geändert, um welchen die Schraube von dem ersten Zeitpunkt zu einem zweiten Zeitpunkt gedreht wurde. Ferner wird eine zweite Senktiefe des Schraubenkopfs zu einem zweiten Zeitpunkt unter Verwendung eines zweiten Abstandsbilds ermittelt, welches zu dem zweiten Zeitpunkt durch den Abstandssensor erfasst wird. Eine axiale Spannung der Schraube wird unter Verwendung einer Differenz zwischen der ersten Senktiefe und der zweiten Senktiefe ermittelt.

Die DE 197 05 346 C1 lehrt ein Verfahren zum Herstellen und Prüfen von Schraubverbindungen, wobei Spezialschrauben zur Anwendung kommen. In solch einer Spezialschraube ist eine von einem Schraubenkopf axial in die Spezialschraube verlaufende Messbohrung eingerichtet, welche als ein Sackloch ausgebildet ist. Beim Anziehen der Spezialschraube verlängert sich die Messbohrung, wobei die Verlängerung der Messbohrung ausgewertet werden kann. Hierfür muss eine Läge der Messbohrung vor und nach, oder eine Längung der Messbohrung während des Verschraubens der Spezialschraube gemessen werden, was durch ein Interferometrie-Verfahren mit einem Miniatur-Interferometer erfolgt, welche einen Boden der Messbohrung detektiert.

Es ergibt sich aus dem Stand der Technik, dass, bei einer gegebenen mechanischen Verbindung für Kraftfahrzeuge, die mittels einer Schraube zu verspannen, d. h. zu verschrauben ist, keine zuverlässige Relation aus einem Anzugsmoment und/oder einem Schraubdrehwinkel mit einer Verspannkraft für eine daraus einzurichtende Schraubverbindung (indirekte Überwachung). - Es ist eine Aufgabe der Erfindung ein verbessertes Verfahren zum Überwachen einer mechanischen Kraftfahrzeug-Schraubverbindung anzugeben, wobei u. U. vollständig auf ein zu überwachendes Anzugsmoment und/oder einen zu überwachenden Schraubdrehwinkel verzichtet werden kann.

Die Aufgabe der Erfindung ist durch ein Verfahren zum Überwachen einer mechanischen Kraftfahrzeug-Schraubverbindung; mittels einer mechanischen Schraubverbindung für den Kraftfahrzeugbereich; und mittels einer Entität, insbesondere einer elektrischen und/oder mechanischen Entität, für den Kraftfahrzeugbereich, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und der folgenden Beschreibung.

Gemäß der Erfindung ist kein ausreichender Zusammenhang zwischen einem Anzugsmoment und/oder einem Schraubdrehwinkel und einer Verspannkraft einer Schraube in einer Schraubverbindung gegeben. Bei dem erfindungsgemäßen Überwachverfahren wird bei einer Schraubverbindung, die wenigstens zwei miteinander mittels einer Schraube zu verspannende Elemente aufweist, eine Elastizitätslängung eines relevanten Schraubenabschnitts der Schraube in der Schraubverbindung als ein Kriterium für eine Verspannkraft der Schraubverbindung herangezogen, und wobei die Elastizitätslängung der Schraube durch ein Röntgenverfahren, insbesondere ein 3D-Röntgenverfahren, ermittelt wird. Gemäß der Erfindung erfolgt einerseits ein Rückschluss aus einer Elastizitätslängung einer Schraube in einer einzurichtenden und/oder eingerichteten Schraubverbindung auf eine Verspannkraft der Schraube der Schraubverbindung. Andererseits erfolgt das Ermitteln der Elastizitätslängung der Schraube durch ein Röntgenverfahren.

Die Verspannkraft (in) der Schraubverbindung aus der Schraube zwischen den wenigstens zwei miteinander verspannten Elementen ist dabei eine gegebene Größe, die sich nach einer Lebensdauer, einer Einsatzbedingung, einer gewünschten Beschaffenheit (Oberflächen, Schmierung, Material etc.), einer Geometrie etc. der Schraubverbindung richtet. Und der für eine Verspannkraft der Schraubverbindung gewählte Parameter der Elastizitätslängung ist dabei insbesondere unabhängig von einer tatsächlichen Beschaffenheit (Oberflächen, Schmierung, Grate am Gewinde, Verschmutzung, Material etc.) der Schraubverbindung. Das Überwachverfahren kann für Schraubverbindungen, für sicherheitskritische Schraubverbindungen, als ein automatisiertes Überwachverfahren, als ein bildgebendes Überwachverfahren und/oder als ein wenigstens partielles 3D-Überwachverfahren ausgebildet sein.

In einer Ausführungsform des Überwachverfahren kann zunächst eine Ausgangslänge des relevanten Schraubenabschnitts für die Schraubverbindung ermittelt werden, wobei zeitlich darauf folgend die Schraubverbindung durch einen Schraubprozess eingerichtet wird. D. h. es wird eine Ausgangslänge des relevanten Schraubenabschnitts zu einem Zeitpunkt ermittelt, zu dem noch keine Längenänderung der Schraube also auch keine Längenänderung des relevanten Schraubenabschnitts eingetreten ist.

Hierbei kann während des Durchführens des Schraubprozesses eine Länge des sich längenden relevanten Schraubenabschnitts in einer sich einrichtenden Schraubverbindung ermittelt, d. h. gemessen, werden. Zusätzlich oder alternativ kann zeitlich nach dem Durchführen des Schraubprozesses eine Endlänge des gelängten relevanten Schraubenabschnitts einer eingerichteten Schraubverbindung ermittelt, d. h. gemessen, werden. Beim Durchführen des Schraubprozesses, d. h. beim Einrichten der Schraubverbindung, erfolgt ein Schauben der Schraube, d. h. z. B. ein Einschrauben der Schaube in ein Sackloch oder ein Verschrauben der Schaube mit einer Schraubenmutter.

Der relevante Schraubenabschnitt kann ein vorher festgelegter Längsabschnitt der Schraube sein, anhand welchem eine Elastizitätslängung der Schraube innerhalb der sich einrichtenden und/oder eingerichteten Schraubverbindung festgestellt wird. Solch ein Längsabschnitt kann ganz allgemein ein Längsendabschnitt oder ein Mittenabschnitt der Schraube sein, oder der Längsabschnitt kann die gesamte Schraube umfassen. - Hierbei kann der Längsabschnitt bzw. der relevante Schraubenabschnitt bevorzugt ausschließlich einen Schraubenkörper der Schraube, oder bevorzugt ausschließlich einen Schraubenkörper und einen Schraubenkopf der Schraube umfassen. Ferner kann der Längsabschnitt bzw. der relevante Schraubenabschnitt bevorzugt ausschließlich einen Schraubenschaft der Schraube, oder bevorzugt ausschließlich einen Schraubenschaft und einen Schraubenkopf der Schraube umfassen.

Der Schraubenkörper ist dabei bevorzugt derjenige Abschnitt der Schraube, welcher bevorzugt vollständig jenseits des Schraubenkopfs liegt. Hierbei kann sich der Schraubenkörper in einen Schraubenschaft, ein Schraubengewinde und ggf. einen weiteren Abschnitt gliedern, wobei zwischen dem Schraubenschaft und dem Schraubengewinde ein Schraubenabsatz zu sehen ist. Am/im Schraubenabsatz kann sich ein Durchmesser der Schraube verändern oder nicht. Bevorzugt umfasst der Schraubenkörper lediglich einen Schraubenschaft und ein Schraubengewinde. Der Schraubenschaft ist dabei bevorzugt derjenige Abschnitt der Schraube, der zwischen dem Schraubenkopf und dem Schraubengewinde liegt, wobei der Schraubenschaft kein Gewinde aufweist und z. B. als ein Dehnschaft ausgebildet sein kann.

Die Ausgangslänge des relevanten Schraubenabschnitts kann abseits bzw. jenseits der Schraubverbindung ermittelt werden. Dies kann z. B. als lose Schraube bevorzugt vor einem röntgenkontrastierenden Hintergrund oder auch in einer speziellen Vorrichtung erfolgen die ebenfalls bevorzugt röntgenkontrastierend ist. Ferner kann die Ausgangslänge des relevanten Schraubenabschnitts in einer losen Schraubverbindung ermittelt werden, wobei kein Anzugsmoment auf die Schraube appliziert ist bzw. wurde. Des Weiteren kann die Ausgangslänge des relevanten Schraubenabschnitts in einer losen Schraubverbindung ermittelt werden, wobei ein geringfügiges Anzugsmoment auf die Schraube appliziert ist bzw. wurde.

Unter einer losen Schraubverbindung ist eine Verbindung der wenigstens zwei miteinander mittels der Schraube zu verspannenden Elemente zu verstehen, wobei noch kein signifikantes Anzugsmoment auf die Schraube aufgebracht ist. Z. B. bei einem Sackloch ist die Schraube nach rechts und nach links freigängig oder wenigstens in die Lösedrehrichtung im Wesentlichen freigängig eingeschraubt. Und bei einer Verschraubung ist die Schraubenmutter bzw. die Schraube nach rechts und nach links freigängig oder wenigstens in die Lösedrehrichtung im Wesentlichen freigängig.

Die Ausgangslänge des relevanten Schraubenabschnitts kann durch ein Röntgenverfahren, insbesondere ein 3D-Röntgenverfahren, ermittelt werden. Die Ausgangslänge des relevanten Schraubenabschnitts korreliert mit der Elastizitätslängung des relevanten Schraubenabschnitts und ggf. wenigstens einem weiteren Parameter des Schaubprozesses, welcher oder welche anhand der Ausgangslänge der Schraube in der Schraubverbindung angepasst werden können. Aufgrund des Röntgenverfahrens kann ein Modell, insbesondere ein 3D-Modell, der Schraube, erstellt werden. Anhand dieses Modells kann z. B. die Ausgangslänge des relevanten Schraubenabschnitts der Schraube ermittelt werden.

Ferner kann aufgrund des Röntgenverfahrens ein Modell, insbesondere ein 3D-Modell, einer Anfangslage der Schraube in der Schraubverbindung ermittelt werden. Die Anfangslage der Schraube kann mit wenigstens einem Parameter des Schaubprozesses korrelieren, welcher anhand der ermittelten Anfangslage der Schraube in der Schraubverbindung angepasst werden kann. Einer ungünstigen Anfangslage der Schraube in der Schraubverbindung kann durch Korrekturen am Schraubprozess begegnet werden. Bei einer negativen Anfangslage der Schraube muss die Schraube aus der Schraubverbindung entnommen und ggf. wieder eingesetzt werden.

Während des Einrichtens der Schraubverbindung kann eine aktuelle Elastizitätslängung des sich längenden relevanten Schraubenabschnitts ermittelt werden. Hierbei kann gemäß der aktuellen Längenänderung ein Anzugsmoment, ein Schraubdrehwinkel und/oder eine Einschraubtiefe der Schraube kontrolliert werden. Ferner kann hierbei gemäß der aktuellen Längenänderung ein Anzugsmoment, ein Schraubdrehwinkel und/oder eine Einschraubtiefe auf die Schraube appliziert werden. Bevorzugt wird der Schaubprozess der Schraube bei Erreichen einer vorherbestimmten Elastizitätslängung des Schraubenabschnitts gestoppt. - Hierbei kann ein Anzugsmoment ein Schraubdrehwinkel und/oder eine Einschraubtiefe der Schraube überwacht werden.

Während des Einrichtens der Schraubverbindung kann die/eine aktuell ermittelte Elastizitätslängung des relevanten Schraubenabschnitts mit vorher bestimmten Daten verglichen werden, und nach vorher bestimmten Kriterien ermittelt werden, ob der Schraubprozess funktionsgemäß erfolgt und/oder wann der Schraubprozess abgeschlossen wird. Hierbei sind die vorher bestimmten Daten insbesondere in einer elektronischen Speichereinheit abgelegt. Erfolgt der Schraubprozess nicht funktionsgemäß, so kann dieser, wenn möglich geändert, falls nicht abgebrochen werden. Im Falle eines Abbruchs kann der Schraubprozess rückgängig gemacht und neu gestartet werden. Ferner kann dabei ein entsprechendes Signal ausgegeben werden.

Während des Einrichtens der Schraubverbindung kann eine Elastizitätslängung des relevanten Schraubenabschnitts durch das Röntgenverfahren, insbesondere das 3D-Röntgenverfahren, ermittelt werden. Die Elastizitätslängung des relevanten Schraubenabschnitts korreliert dabei mit wenigstens einem Parameter des Schaubprozesses, welcher anhand der Elastizitätslängung der Schraube in der Schraubverbindung angepasst werden kann.

Ferner kann dabei aufgrund des Röntgenverfahrens ein Modell, insbesondere ein 3D-Modell, einer Lageveränderung der Schraube in der Schraubverbindung ermittelt werden. Die Lageveränderung der Schraube kann mit wenigstens einem Parameter des Schaubprozesses korrelieren, welcher anhand der ermittelten Lageveränderung der Schraube in der Schraubverbindung angepasst werden kann. Einer ungünstigen Lageveränderung der Schraube in der Schraubverbindung kann durch Korrekturen am Schraubprozess begegnet werden. Bei einer negativen Lageveränderung der Schraube muss die Schraubverbindung gelockert und wieder angezogen, oder vollständig aufgeschraubt werden.

Während und/oder nach dem Einrichten der Schraubverbindung können Parameter und/oder Bilder, insbesondere Röntgenbilder, des Überwachverfahrens gespeichert werden. - Zeitlich nach dem Einrichten der Schraubverbindung kann eine Endlänge des relevanten Schraubenabschnitts durch das Röntgenverfahren, insbesondere das 3D-Röntgenverfahren, ermittelt werden. Die Endlänge des relevanten Schraubenabschnitts kann mit wenigstens einem Parameter des Schaubprozesses korrelieren, welcher anhand der Endlänge der Schraube in der Schraubverbindung angepasst werden kann.

Ferner kann zeitlich nach dem Einrichten der Schraubverbindung aufgrund des Röntgenverfahrens ein Modell, insbesondere ein 3D-Modell, einer Endlage der Schraube in der Schraubverbindung ermittelt werden. Einer ungünstigen Endlage der Schraube in der Schraubverbindung kann ggf. durch geringfügiges Lockern und Wiederanziehen der Schraube begegnet werden. Bei einer negativen Endlage der Schraube muss die Schraubverbindung wesentlich gelockert und wieder angezogen, oder vollständig aufgeschraubt werden.

Erfindungsgemäß wird ein mit der Verspannkraft der Schraube in einer Schraubverbindung eng korrelierende Messgröße - die Elastizitätslängung des relevanten Schraubenabschnitts - erhalten, welche nahezu frei von Messfehlern ist, die aufgrund von Reibung im Gewinde und am Schraubenkopf entstehen. Das Überwachverfahren kann bei einer Steuerung und/oder Regelung eines Schraubprozesses eingesetzt werden. Es ist möglich, die Erfindung zusätzlich mit den aus dem Stand der Technik bekannten Messgrößen Anzugsmoment, Schraubdrehwinkel, Einschraubtiefe etc. zu kombinieren.

Gemäß der Erfindung ist ein direkter Rückschluss der Verspannkraft, also einer mechanischen Kraft aus der Schraube, aufgrund der ermittelten bzw. gemessenen Elastizitätslängung möglich. Das erfindungsgemäße direkte Überwachverfahren kann als Echtzeitverfahren ausgebildet sein (schneller als bisheriges indirektes Überwachungsverfahren). Es können Schraubroboter oder einfachere Schraubroboter als im Stand der Technik angewendet werden; d. h. es ist keine Anzugsmoment- und/oder Schraubrehwinkel-Überwachung mehr nötig, kann aber angewendet werden.

Ferner ergibt sich gemäß der Erfindung eine Minderung eines Ausschusses, denn bei ungenügender Längung der Schaube kann insbesondere ein Anzugsmoment und/oder ein Schraubrehwinkel während Schraubprozess nachgeführt werden, bis eine genügende Längung erreicht ist. Sonstige einen Schraubprozess negativ beeinflussende Parameter können erkannt und entsprechen markiert werden (Grate, Verschmutzungen etc.). Eine Zurückverfolgbarkeit der Schraubverbindungen ist zu 100% gegeben, wobei eine 100%-Überwachung mit direkter Rückführung auf die Schraubkraft gegeben ist. ,Schlupf' ist im Rahmen der erfindungsgemäßen Überwachung kein Thema. Eine Reduzierung bzw. Minimierung eines Fertigungsausschusses und einer Nacharbeit sind ggf. bis auf null möglich.

Die erfindungsgemäße mechanische Kraftfahrzeug-Schraubverbindung ist durch ein erfindungsgemäßes Überwachverfahren einer mechanischen Kraftfahrzeug-Schraubverbindung geprüft. Die Schraubverbindung kann z. B. als eine Schraubverbindung einer Entität des Kraftfahrzeugs, insbesondere einer elektrischen und/oder mechanischen Entität des Kraftfahrzeugs, ausgebildet sein. Hierbei kann die Schraubverbindung z. B. als eine Busbar-Schraubverbindung ausgebildet sein.

Die erfindungsgemäße Kraftfahrzeug-Entität weist eine erfindungsgemäße mechanische Schraubverbindung auf. Die z. B. mechanische, (leistungs-)elektrische, fluidische und/oder optische Entität kann dabei als eine Vorrichtung; eine Einrichtung; ein Modul, z. B. eine HV-Verteilerbox für ein Elektrofahrzeug; ein Apparat; ein System; etc. ausgebildet sein. Hierbei kann die Schraubverbindung z. B. zwischen zwei solchen Entitäten als eine (übergeordnete) Entität eingerichtet sein.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Figuren (Fig.) zeigen:
die Fig. 1 ein einfaches Flussdiagramm einer ersten Ausführungsform eines erfindungsgemäßen Überwachverfahrens zum Überwachen einer mechanischen Kraftfahrzeug-Schraubverbindung,
die Fig. 2 ein einfaches Flussdiagramm einer zweiten Ausführungsform eines erfindungsgemäßen Überwachverfahren zum Inspizieren einer mechanischen Kraftfahrzeug-Schraubverbindung,
die Fig. 3 eine zentral geschnittene Ansicht einer losen Schraubverbindung wobei kein oder lediglich ein geringfügiges Anzugsmoment auf eine Schraube der Schraubverbindung appliziert ist bzw. wurde, und
die Fig. 4 eine zentral geschnittene Ansicht einer angezogenen Schraubverbindung wobei ein nominales Anzugsmoment auf eine Schraube der Schraubverbindung appliziert ist bzw. wurde.

Die Erfindung ist im Folgenden anhand von Ausführungsformen einer Variante eines erfindungsgemäßen Verfahrens zum Überwachen (Überwachverfahren) einer mechanischen Schraubverbindung 1; 10, 20, 30, insbesondere einer Kraftfahrzeug-Schraubverbindung 1; 10, 20, 30, nachfolgend und oben auch nur als Schraubverbindung 1; 10, 20, 30 bezeichnet, näher erläutert. Obwohl die Erfindung detaillierter durch bevorzugte Ausführungsformen näher beschrieben und illustriert ist, so ist die Erfindung nicht durch die offenbarten Ausführungsformen eingeschränkt, sondern ist von grundlegenderer Natur. Andere Variationen können hieraus und/oder aus Obigem (Erfindungsbeschreibung) abgeleitet werden, ohne den Schutzumfang der Erfindung zu verlassen. Die Erfindung ist dabei allgemein im mechanischen, (leistungs-)elektrischen (auch elektrische Energietechnik und Analoga (sehr hohe bis maximale elektrische Ströme und Spannungen)), fluidischen und/oder optischen Bereich bei einer Entität 0 anwendbar (vgl. o.).

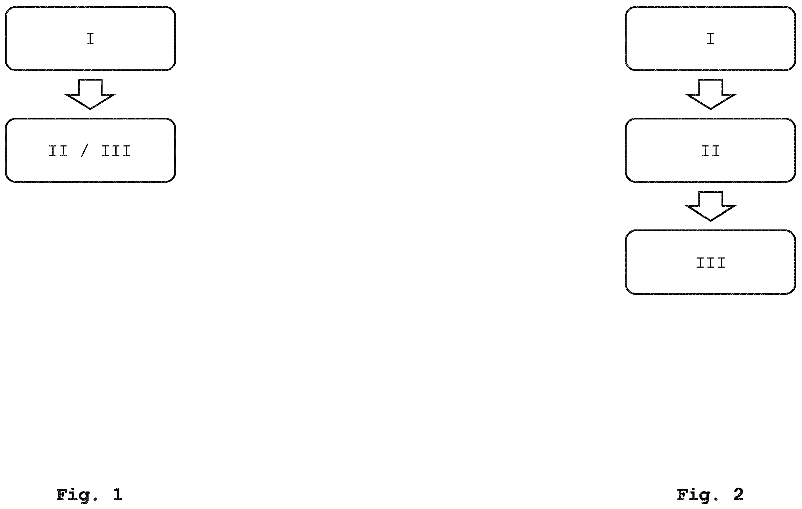

In der Zeichnung sind nur diejenigen räumlichen Abschnitte eines Gegenstands der Erfindung dargestellt (Fig. 1 und 2), welche für ein Verständnis der Erfindung notwendig sind. - Die Fig. 1 und 2 zeigen Flussdiagramme zweier Ausführungsformen des erfindungsgemäßen Überwachverfahrens. Hierbei ist das Überwachverfahren der Fig. 1 als ein Überwachverfahren zum im Wesentlichen kontinuierlichen Überwachen eines Schraubprozesses der Schraubverbindung 1; 10, 20, 30, und das Überwachverfahren der Fig. 2 als ein Überwachverfahren zum nachträglichen Inspizieren eines korrekt durchgeführten und abgeschlossenen Schraubprozesses der Schraubverbindung 1; 10, 20, 30 ausgebildet.

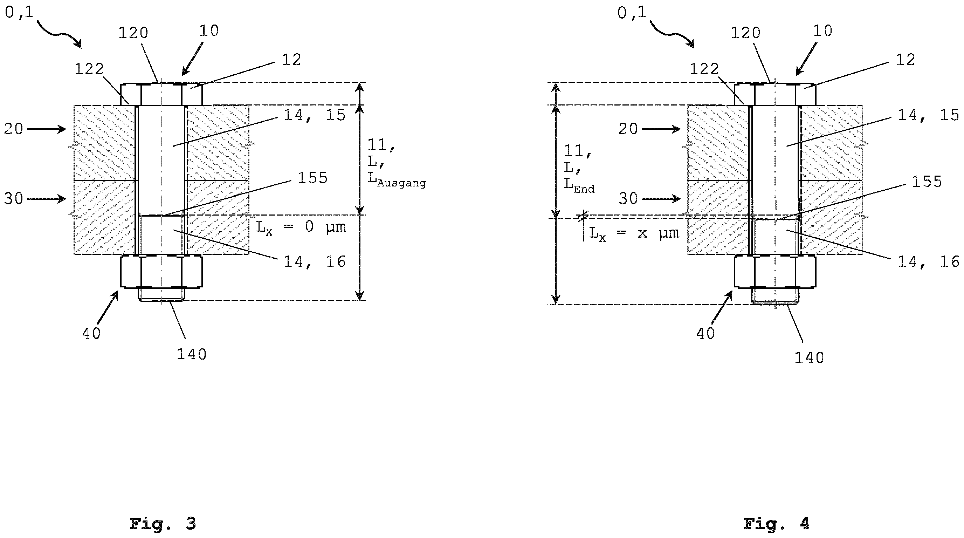

Die Schraubverbindung 1; 10, 20, 30, vgl. auch die Fig. 3 und 4, weist wenigstens zwei miteinander zu verspannende Elemente 30, 40 auf, die mittels einer Schraube 10 miteinander verspannt werden (Fig. 1) bzw. sind (Fig. 2). Die Schraube 10 kann dabei als eine Mutternschraube, ein Schraubenbolzen, eine Dehnschraube, eine Passschraube etc. ausgebildet sein. Die Schraubverbindung 1; 10, 20, 30 kann dabei durch eine Sacklochverschraubung (keine Schraubenmutter notwendig, nicht dargestellt) oder eine Durchgangslochverschraubung (Schraubenmutter 40 o. ä. notwendig, vgl. die Fig. 3 und 4) hergestellt werden (Fig. 1) bzw. sein (Fig. 2).

Das Überwachverfahren gliedert sich grob in wenigstens drei Phasen I, II, III, wobei alle drei Phasen I, II, III sequentiell ablaufen können (Fig. 2) oder die Phase II und die Phase III im Wesentlichen parallel arbeiten können und der Phase I sequentiell nachgeschaltet sind (Fig. 1). - In der ersten Phase I wird eine Ausgangslänge L_{Ausgang} eines relevanten Schraubenabschnitts 11 (vgl. unten/oben und Fig. 2 und 3) der Schraube 10 für die Schraubverbindung 1; 10, 20, 30 ermittelt. In der zweiten Phase II wird ein Schraubprozess durchgeführt, wobei sich der relevante Schraubenabschnitt 11 und die Schraube 10 selbst längt und eine Elastizitätslängung Lx im relevanten Schraubenabschnitt L der Schraube 10 und der Schraube 10 selbst auftritt. In der dritten Phase III wird eine Länge des relevanten Schraubenabschnitts 11 kontinuierlich (Fig. 1) und/oder zeitpunktuell (Fig. 2, ggf. auch Fig. 1) ermittelt.

Sind die Phase II und die Phase III parallel geschaltet (Fig. 1), so kann während des Durchführens des Schraubprozesses eine Länge L: L_{Ausgang} < L ≤ L_{End} des sich längenden relevanten Schraubenabschnitts 11 ermittelt werden. Hierbei wird natürlich insbesondere auch eine Endlänge L_{End}: L = L_{End} des gelängten relevanten Schraubenabschnitts 11 ermittelt. - Sind die Phase II und die Phase III sequentiell geschaltet (Fig. 2), so kann zeitlich nach dem Durchführen des Schraubprozesses lediglich eine Endlänge L_{End}: L = L_{End} des gelängten relevanten Schraubenabschnitts 11 ermittelt werden. - Gemäß der Erfindung erfolgt eine Bestimmung bzw. Messung der Ausgangslänge L_{Ausgang} des relevanten Schraubenabschnitts 11, der Länge(n) L des sich längenden relevanten Schraubenabschnitts 11 (aktuelle Elastizitätslängung L_{X,aktuell}: L_{X} = L_{gemessen} - L_{Ausgang}) und/oder der Endlänge L_{End} des gelängten relevanten Schraubenabschnitts 11 durch wenigstens ein Röntgenverfahren, insbesondere wenigstens ein 3D-Röntgenverfahren.

Durch ein/das Röntgenverfahren wird in der ersten Phase I wenigstens die Ausgangslänge L_{Ausgang} des relevanten Schraubenabschnitts 11 ermittelt (Fig. 1 und 2). Ferner kann in der ersten Phase I ein Modell der Schraube 10 und/oder ein Modell, einer Anfangslage der Schraube 10 in der Schraubverbindung 1; 10, 20, 30, also in einer Bohrung der Elemente 20, 30, ermittelt werden. Einer ungünstigen Anfangslage kann durch Korrekturen am Schraubprozess begegnet werden und bei einer negativen Anfangslage braucht mit dem Schraubprozess erst gar nicht begonnen werden, sodass einem Schaden und/oder einem später entstehenden Schaden an/in der Schraubverbindung 1; 10, 20, 30 vorgebeugt werden kann.

Durch ein/das Röntgenverfahren kann während der parallelen zweiten II und dritten Phase III wenigstens die Elastizitätslängung Lx des relevanten Schraubenabschnitts 11 ermittelt werden (Fig. 1, Phase III), was kontinuierlich und/oder zu bestimmten Zeitpunkten erfolgen kann. Ferner kann in der dritten Phase III während der zweiten II Phase ein Modell einer Lageveränderung der Schraube 10 in der Schraubverbindung 1; 10, 20, 30, also in der Bohrung der Elemente 20, 30, ermittelt werden. Einer ungünstigen Lageveränderung kann durch Korrekturen am Schraubprozess begegnet werden, und bei einer negativen Lageveränderung kann der Schraubprozess abgebrochen oder unterbrochen werden, sodass einem Schaden und/oder einem später entstehenden Schaden an/in der Schraubverbindung 1; 10, 20, 30 vorgebeugt werden kann. - Alternativ wird lediglich Phase II, d. h. lediglich der Schraubprozess ohne ein Röntgenüberwachen der Schraube 10 bzw. der entstehenden der Schraubverbindung 1; 10, 20, 30 durchgeführt (Fig. 2).

Durch ein/das Röntgenverfahren wird in der dritten Phase III während eines Endabschnitts der zweiten Phase II oder wird in der dritten Phase III zeitlich nach der zweiten Phase II, beim (Fig. 1) bzw. nach (Fig. 2) dem endgültigen Einrichten der Schraubverbindung 1; 10, 20, 30 die Endlänge L_{End} des relevanten Schraubenabschnitts 11 ermittelt (Fig. 1 und 2). Ferner kann in der dritten Phase III ein Modell einer Endlage der Schraube 10 in der Schraubverbindung 1; 10, 20, 30, also in der Bohrung der Elemente 20, 30, ermittelt werden. Einer ungünstigen Endlage kann durch Korrekturen, d. h. durch eine Wiederaufnahme des Schraubprozesses begegnet werden, und bei einer negativen Endlage kann der Schraubprozess teilweise oder vollständig rückgängig gemacht werden, sodass einem noch entstehenden Schaden an/in der Schraubverbindung 1; 10, 20, 30 vorgebeugt werden kann.

Insbesondere wird in der dritten Phase III (Fig. 1 und 2), d. h. natürlich auch parallel gegen Ende der zweiten Phase II (Fig. 1), überprüft, ob eine intendierte Elastizitätslängung Lx des relevanten Schraubenabschnitts 11 vorliegt oder nicht. Liegt sie vor, so ist, einmal von anderen ggf. mitüberwachten Parametern, die Schraubverbindung 1; 10, 20, 30 in Ordnung. Ist die intendierte Elastizitätslängung Lx des relevanten Schraubenabschnitts 11 zu klein (unterhalb einer unteren Toleranz), kann der Schraubprozess wieder aufgenommen werden und die noch benötigte Elastizitätslängung Lx in die Schraube 10 eingebracht werden (etwas weiter Zuschrauben). Ist die intendierte Elastizitätslängung Lx des relevanten Schraubenabschnitts 11 zu groß (oberhalb einer oberen Toleranz), kann der Schraubprozess wieder aufgenommen werden und eine korrekte Elastizitätslängung Lx in der Schraube 10 eingerichtet werden (wieder etwas Aufschrauben).

Ferner kann in wenigstens einer der Phasen I, II, III wenigstens ein weiterer Parameter der Schraube (eine automatisches Erkennen der Schraube, ein Erkennen eines Fabrikationsfehlers in der Schraube 10, etc.) und/oder des Schaubprozesses (ein appliziertes Anzugsmoment, ein applizierter Schraubdrehwinkel, eine applizierter Einschraubtiefe, ein zeitlicher Verlauf des Schaubprozesses etc., wobei diese Parameter nicht überwacht zu werden brauchen) ermittelt werden. Der Schraubprozess kann anhand wenigstens eines solchen Parameters entsprechend angepasst werden.

Eine für das Verfahren anwendbare Schraube 10, vgl. die Fig. 3 und 4, gliedert sich vorliegend in einen Schraubenkopf 12 und einen Schraubenkörper 14, wobei sich der Schraubenkörper 14 in einen Schraubenschaft 15 und ein Schraubengewinde 16 untergliedert. Der Schraubenschaft 15 ist der gewindelose Teil der Schraube 10 jenseits des Schraubenkopfs 12 und kann als ein Dehnschaft ausgebildet sein. - Andere Schrauben, z. B. eine ohne einen Schraubenschaft 15, eine mutterlose Schraube 10, also ein Schraubenbolzen 10, etc. sind natürlich anwendbar.

Hierbei erstreckt sich die Schraube 10 in ihrer Längsrichtung von einem freien Ende 120 ihres Schraubenkopfs 12 bis an ein freies Ende 140 ihres Schraubenkörpers 14 bzw. ihres Schraubengewindes 16 (Gesamtlänge der Schraube 10). Ferner weist die Schraube 10 als markante Positionen (Markierungen) ein inneres Ende 122 des Schraubenkopfs 12 sowie einen Schraubenabsatz 155 (Ende des Schraubenschafts 15 im Schraubenkörper 14 und/oder Beginn des Schraubengewindes 16 im Schraubenkörper 14) auf.

Gemäß der Erfindung kann sich der relevante Schraubenabschnitt 11 vom freien Ende 120 des Schraubenkopfs 12 bis an den Schraubenabsatz 155 oder an das freie Ende 140 des Schraubenkörpers 14 erstrecken. Ferner kann sich der relevante Schraubenabschnitt 11 vom inneren Ende 122 des Schraubenkopfs 12 bis an den Schraubenabsatz 155 oder an das freie Ende 140 des Schraubenkörpers 14 erstrecken.

Andere relevante Schraubenabschnitte 11 sind natürlich möglich und prinzipiell frei wählbar, wobei darauf zu achten ist, dass eine signifikante Elastizitätslängung Lx der Schraube 10 im gewählten relevanten Schraubenabschnitt 11 erfolgt. Hierbei kann der relevante Schraubenabschnitt 11 an der Schraube 10, insbesondere am Schraubenkörper 14, ggf. nur einseitig markiert werden. Bei einer einseitigen Markierung übernimmt z. B. das freie Ende 120 oder das innere Ende 122 des Schraubenkopfs 12, der Schraubenabsatz 155 oder das freie Ende 140 des Schraubenkörpers 14 die Funktion der zweiten notwenigen Markierung für eine Definition des relevanten Schraubenabschnitts 11 durch das Röntgenverfahren.

### Bezugszeichenliste

- 1: (mechanische) sicherheitskritische (Kraftfahrzeug-)Schraubverbindung
- 10: Schraube
- 11: für das direkte Überwachverfahren relevanter Schraubenabschnitt mit Länge L
- 12: Schraubenkopf
- 14: Schraubenkörper
- 15: Schraubenschaft, gewindeloser Teil der Schraube 10 jenseits des Schraubenkopfs 12
- 16: Schraubengewinde
- 120: freies/äußeres Ende des Schraubenkopfs 12
- 122: gebundenes/inneres Ende des Schraubenkopfs 12
- 140: freies/äußeres Ende des Schraubenkörpers 14
- 155: Schraubenabsatz, Ende des Schraubenschafts 15 und/oder Beginn des Schraubengewindes 16
- 20: (erstes zu verschraubendes) Element der Schraubverbindung 1
- 30: (zweites zu verschraubendes) Element der Schraubverbindung 1
- 40: Schraubenmutter, nicht bei Sacklochverschraubung (hier: Schraubenbolzen), o. ä.
- 0: Entität

- L: Länge des relevanten Schraubenabschnitts 11, L_{Ausgang} = L ≤ L_{End}
- L_{gemessen}: aktuelle Länge des relevanten Schraubenabschnitts 11
- L_{Ausgang}: Ausgangslänge des relevanten Schraubenabschnitts 11
- L_{End}: Endlänge relevanten Schraubenabschnitts 11
- Lx: Elastizitätslängung des relevanten Schraubenabschnitts 11
- I: erste Phase des Überwachverfahrens (Messen der Schraube)
- II: zweite Phase des Überwachverfahrens, ggf. parallel zu dritter Phase (Messen der Schraube)
- III: dritte Phase des Überwachverfahrens, ggf. parallel zu zweiter Phase

## Patentansprüche

1. Verfahren zum Überwachen einer mechanischen Kraftfahrzeug-Schraubverbindung (1; 10, 20, 30), wobei die Schraubverbindung (1; 10, 20, 30) wenigstens zwei miteinander mittels einer Schraube (10) zu verspannende Elemente (30, 40) aufweist, **dadurch gekennzeichnet, dass**
eine Elastizitätslängung (Lx) eines relevanten Schraubenabschnitts (11) der Schraube (10) in der Schraubverbindung (1; 10, 20, 30) als ein Kriterium für eine Verspannkraft der Schraubverbindung (1; 10, 20, 30) herangezogen wird, und die Elastizitätslängung der Schraube (10) durch ein Röntgenverfahren, insbesondere ein 3D-Röntgenverfahren, ermittelt wird.

2. Überwachverfahren gemäß vorhergehendem Anspruch, **dadurch gekennzeichnet, dass** zunächst (I) eine Ausgangslänge (L_{Ausgang}, I) des relevanten Schraubenabschnitts (11) für die Schraubverbindung (1; 10, 20, 30) ermittelt wird, und zeitlich darauf folgend (II) die Schraubverbindung (1; 10, 20, 30) durch einen Schraubprozess eingerichtet wird.

3. Überwachverfahren gemäß einem der vorhergehenden Ansprüche, **dadurch gekennzeichnet, dass**
während (II, III) des Durchführens des Schraubprozesses eine Länge (L: L_{Ausgang} < L ≤ L_{End}) des sich längenden relevanten Schraubenabschnitts (11) in einer sich einrichtenden Schraubverbindung (1; 10, 20, 30) ermittelt wird, und/oder
zeitlich nach (III) dem Durchführen des Schraubprozesses eine Endlänge (L_{End}: L = L_{End}) des gelängten relevanten Schraubenabschnitts (11) einer eingerichteten Schraubverbindung (1; 10, 20, 30) ermittelt wird.

4. Überwachverfahren gemäß einem der vorhergehenden Ansprüche, **dadurch gekennzeichnet, dass** der relevante Schraubenabschnitt (11) ein vorher festgelegter Längsabschnitt der Schraube (10) ist, anhand welchem eine Elastizitätslängung (Lx: Lx = L_{End} - L_{Ausgang}) der Schraube (10) innerhalb der sich einrichtenden und/oder eingerichteten Schraubverbindung (1; 10, 20, 30) festgestellt wird.

5. Überwachverfahren gemäß einem der vorhergehenden Ansprüche, **dadurch gekennzeichnet, dass** die Ausgangslänge (L_{Ausgang}, I) des relevanten Schraubenabschnitts (11):
• abseits der Schraubverbindung (1; 10, 20, 30) ermittelt wird,
• in einer losen Schraubverbindung (1; 10, 20, 30) ermittelt wird, wobei kein Anzugsmoment auf die Schraube (10) appliziert ist bzw. wurde, und/oder
• in einer losen Schraubverbindung (1; 10, 20, 30) ermittelt wird, wobei ein geringfügiges Anzugsmoment auf die Schraube (10) appliziert ist bzw. wurde.

6. Überwachverfahren gemäß einem der vorhergehenden Ansprüche, **dadurch gekennzeichnet, dass**:
• die Ausgangslänge (L_{Ausgang}, I) des relevanten Schraubenabschnitts (11) durch ein Röntgenverfahren, insbesondere ein 3D-Röntgenverfahren, ermittelt wird,
• aufgrund des Röntgenverfahrens ein Modell, insbesondere ein 3D-Modell, der Schraube (10), erstellt wird,
• aufgrund des Röntgenverfahrens ein Modell, insbesondere ein 3D-Modell, einer Anfangslage der Schraube (10) in der Schraubverbindung (1; 10, 20, 30) ermittelt wird, und/oder
• einer ungünstigen Anfangslage der Schraube (10) in der Schraubverbindung (1; 10, 20, 30) durch Korrekturen am Schraubprozess begegnet wird.

7. Überwachverfahren gemäß einem der vorhergehenden Ansprüche, **dadurch gekennzeichnet, dass** während des Einrichtens der Schraubverbindung (1; 10, 20, 30 - II, III):
• eine aktuelle Elastizitätslängung (Lx) des sich längenden relevanten Schraubenabschnitts (11) ermittelt wird,
• gemäß der aktuellen Längenänderung ein Anzugsmoment, ein Schraubdrehwinkel und/oder eine Einschraubtiefe der Schraube (10) appliziert und/oder kontrolliert wird, und/oder
• der Schaubprozess der Schraube (10) bei Erreichen einer vorherbestimmten Elastizitätslängung (L_{X}: L_{X} = L_{End} - L_{Ausgang}) des Schraubenabschnitts (11) gestoppt wird.

8. Überwachverfahren gemäß einem der vorhergehenden Ansprüche, **dadurch gekennzeichnet, dass** während des Einrichtens der Schraubverbindung (1; 10, 20, 30 - II, III) eine/die aktuell ermittelte Elastizitätslängung (Lx) des relevanten Schraubenabschnitts (11) mit vorher bestimmten Daten verglichen wird, und nach vorher bestimmten Kriterien ermittelt wird, ob der Schraubprozess funktionsgemäß erfolgt und/oder wann der Schraubprozess abgeschlossen wird.

9. Überwachverfahren gemäß einem der vorhergehenden Ansprüche, **dadurch gekennzeichnet, dass** während des Einrichtens der Schraubverbindung (1; 10, 20, 30 - II, III):
• eine Elastizitätslängung (Lx; II, III) des relevanten Schraubenabschnitts (11) durch das Röntgenverfahren, insbesondere das 3D-Röntgenverfahren, ermittelt wird,
• aufgrund des Röntgenverfahrens ein Modell, insbesondere ein 3D-Modell, einer Lageveränderung der Schraube (10) in der Schraubverbindung (1; 10, 20, 30) ermittelt wird, und/oder
• bei einer ungünstigen Lageveränderung der Schraube (10) in der Schraubverbindung (1; 10, 20, 30) durch Korrekturen am Schraubprozess begegnet wird.

10. Überwachverfahren gemäß einem der vorhergehenden Ansprüche, **dadurch gekennzeichnet, dass** zeitlich nach dem Einrichten der Schraubverbindung (1; 10, 20, 30 - III):
• eine Endlänge (L_{End}, III) des relevanten Schraubenabschnitts (11) durch das Röntgenverfahren, insbesondere das 3D-Röntgenverfahren, ermittelt wird,
• aufgrund des Röntgenverfahrens ein Modell, insbesondere ein 3D-Modell, einer Endlage der Schraube (10) in der Schraubverbindung (1; 10, 20, 30) ermittelt wird, und/oder
• Parameter und/oder Bilder, insbesondere Röntgenbilder, des Überwachverfahrens gespeichert werden.

11. Mechanische Kraftfahrzeug-Schraubverbindung (1; 10, 20, 30), **dadurch gekennzeichnet, dass** die Schraubverbindung (1; 10, 20, 30) durch ein Verfahren zum Überwachen einer mechanischen Kraftfahrzeug-Schraubverbindung (1; 10, 20, 30) gemäß einem der vorhergehenden Ansprüche geprüft ist.

12. Schraubverbindung (1; 10, 20, 30) gemäß vorhergehendem Anspruch, **dadurch gekennzeichnet, dass** die Schraubverbindung (1; 10, 20, 30) als eine Schraubverbindung (1; 10, 20, 30) einer Entität (0) des Kraftfahrzeugs, insbesondere einer elektrischen und/oder mechanischen Entität (0) des Kraftfahrzeugs, ausgebildet ist.

13. Kraftfahrzeug-Entität (0), insbesondere elektrische und/oder mechanische Entität (0), **dadurch gekennzeichnet, dass** die Entität (0) eine mechanische Schraubverbindung (1; 10, 20, 30) gemäß vorhergehendem Anspruch aufweist.
